(19) Europäisches Patentamt / European Patent Office / Office européen des brevets

(11) EP 3 660 845 B1

(12) **EUROPEAN PATENT SPECIFICATION**

(45) Date of publication and mention
of the grant of the patent:
**08.06.2022  Bulletin 2022/23**

(21) Application number: **19197660.4**

(22) Date of filing: **01.12.2014**

(51) International Patent Classification (IPC):
**G10L 25/78** *(2013.01)*      **G10L 25/18** *(2013.01)*

(52) Cooperative Patent Classification (CPC):
**G10L 25/78;** G10L 25/18; G10L 2025/783

(54) **METHOD FOR DETECTING AUDIO SIGNAL AND APPARATUS**

VERFAHREN ZUR DETEKTION EINES AUDIOSIGNALS UND VORRICHTUNG

PROCÉDÉ DE DÉTECTION DE SIGNAL AUDIO ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.03.2014  CN 201410090386**

(43) Date of publication of application:
**03.06.2020  Bulletin 2020/23**

(62) Document number(s) of the earlier application(s) in
accordance with Art. 76 EPC:
**14885786.5 / 3 118 852**

(73) Proprietor: **Huawei Technologies Co., Ltd.
Longgang District
Shenzhen, Guangdong 518129 (CN)**

(72) Inventor: **WANG, Zhe
Shenzhen, Guangdong (CN)**

(74) Representative: **Pfenning, Meinig & Partner mbB
Patent- und Rechtsanwälte
Theresienhöhe 11a
80339 München (DE)**

(56) References cited:
**US-A1- 2013 191 117     US-A1- 2013 304 464**

• **WEIWU JIANG ET AL: "A new voice activity
detection method using maximized Sub-band
SNR", AUDIO LANGUAGE AND IMAGE
PROCESSING (ICALIP), 2010 INTERNATIONAL
CONFERENCE ON, IEEE, PISCATAWAY, NJ,
USA, 23 November 2010 (2010-11-23), pages
80-84, XP031847414, ISBN: 978-1-4244-5856-1**

**Description**

**TECHNICAL FIELD**

Embodiments of the present invention relate to the field of signal processing technologies, and more specifically, to a method for detecting an audio signal and an apparatus.

**BACKGROUND**

Voice activity detection (VAD) is a key technology widely used in fields such as voice communications and man-machine interaction. The VAD may also be referred to as sound activity detection (SAD). The VAD is used to detect whether there is an active signal in an input audio signal, where the active signal is relative to an inactive signal (such as environmental background noise and a mute voice). Typical active signals include a voice, music, and the like. A principle of the VAD is that one or more feature parameters are extracted from an input audio signal, one or more feature values are determined according to the one or more feature parameters, and then the one or more feature values are compared with one or more thresholds.

In the prior art, an active signal detection method based on a segmental signal-to-noise ratio (SSNR) includes: dividing an input audio signal into multiple sub-band signals on a frequency band, calculating energy of the audio signal on each sub-band, and comparing the energy of the audio signal on each sub-band with estimated energy of a background noise signal on each sub-band, so as to obtain a signal-to-noise ratio (SNR) of the audio signal on each sub-band; and then determining an SSNR according to a sub-band SNR of each sub-band, and comparing the SSNR with a preset VAD decision threshold, where if the SSNR exceeds the VAD decision threshold, the audio signal is an active signal, or if the SSNR does not exceed the VAD decision threshold, the audio signal is an inactive signal.

A typical method for calculating the SSNR is to add up all sub-band SNRs of the audio signal, and a result obtained is the SSNR. For example, the SSNR may be determined by using formula 1.1:

$$SSNR = \sum_{k=0}^{N-1} snr(k) \qquad \text{Formula 1.1}$$

where k indicates the k$^{th}$ sub-band, snr(k) indicates a sub-band SNR of the k$^{th}$ sub-band, and N indicates a total quantity of sub-bands into which the audio signal is divided.

When the foregoing method for calculating the SSNR is used to detect an active voice, miss detection of an active voice may occur.

US 2013/191117 A1 describes that in speech processing systems, compensation is made for sudden changes in the background noise in the average signal-to-noise ratio (SNR) calculation. SNR outlier filtering may be used, alone or in conjunction with weighting the average SNR. Adaptive weights may be applied on the SNRs per band before computing the average SNR. The weighting function can be a function of noise level, noise type, and/or instantaneous SNR value. Another weighting mechanism applies a null filtering or outlier filtering which sets the weight in a particular band to be zero. This particular band may be characterized as the one that exhibits an SNR that is several times higher than the SNRs in other bands.

US 2013/130464 A1 provides a method and an apparatus for adaptively detecting a voice activity in an input audio signal composed of frames. The method comprises the steps of: determining a noise characteristic of the input signal based on a received frame of the input audio signal; deriving a voice activity detection (VAD) parameter based on the noise characteristic of the input audio signal; and comparing the derived VAD parameter with a threshold value to provide a voice activity detection decision.

Weiwu Jiang et. al. in "A new voice activity detection method using maximized Sub-band SNR" present a novel voice activity detection (VAD) method using Maximum Values of Sub-band SNR (MVSS) as the detection feature. The proposed new feature MVSS has different distributions between speech and non-speech signal, which is helpful for separating the speech signal from heavy noise. An adaptive threshold is applied to improve VAD accuracies and track the noisy signal rapidly without complex computation.

**SUMMARY**

Embodiments of the present invention provide a method for detecting an audio signal and an apparatus, which can accurately distinguish between an active voice and an inactive voice.

The invention is defined in the appended claims. In the following, occurrences of the word "embodiment(s)", which refer to embodiments not falling within the scope of claims, relate to examples which were originally filed but which do not represent embodiments of the presently claimed invention; these examples are still shown for illustrative purpose only.

According to a first aspect, an embodiment of the present invention provides a computer-implemented method for detecting an audio signal, where the method includes: determining an input audio signal as a to-be-determined audio signal; determining an enhanced segmental signal-to-noise ratio (SSNR) of the audio signal, where the enhanced SSNR is greater than a reference SSNR; and comparing the enhanced SSNR with a voice activity detection (VAD) decision threshold to determine whether the audio signal is an active signal.

According to the invention, the computer-implemented method further includes: determining the audio signal as a to-be-determined audio signal in a case in which it is determined that the audio signal is an unvoiced signal.

According to the invention, the computer-implemented method further includes: determining a reference SSNR of the audio signal; and determining the enhanced SSNR according to the reference SSNR of the audio signal.

With reference to an implementation manner of the first aspect, the determining the enhanced SSNR according to the reference SSNR of the audio signal includes: determining the enhanced SSNR by using the following formula: $SSNR' = x * SSNR + y$, where SSNR indicates the reference SSNR, SSNR' indicates the enhanced SSNR, and x and y indicate enhancement parameters.

According to a second aspect, an embodiment of the present invention provides a computer-implemented method for detecting an audio signal, where the method includes:

determining an input audio signal as a to-be-determined audio signal; determining a weight of a sub-band SNR of each sub-band in the audio signal, where a weight of a sub-band SNR of a high-frequency portion sub-band whose sub-band SNR is greater than a first preset threshold is greater than a weight of a sub-band SNR of another sub-band; determining an enhanced SSNR according to the sub-band SNR of each sub-band and the weight of the sub-band SNR of each sub-band in the audio signal, where the enhanced SSNR is greater than a reference SSNR; and comparing the enhanced SSNR with a VAD decision threshold to determine whether the audio signal is an active signal.

According to a fourth aspect, an embodiment of the present invention provides an apparatus, where the apparatus includes: a first determining unit, configured to determine an input audio signal as a to-be-determined audio signal; a second determining unit, configured to determine an enhanced SSNR of the audio signal, where the enhanced SSNR is greater than a reference SSNR; and a third determining unit, configured to compare the enhanced SSNR with a VAD decision threshold to determine whether the audio signal is an active signal.

According to the invention, the first determining unit is specifically configured to determine the audio signal as a to-be-determined audio signal in a case in which it is determined that the audio signal is an unvoiced signal.

According to an embodiment, the second determining unit is specifically configured to determine a weight of a sub-band SNR of each sub-band in the audio signal, where a weight of a sub-band SNR of a high-frequency portion sub-band whose sub-band SNR is greater than the first preset threshold is greater than a weight of a sub-band SNR of another sub-band; and determine the enhanced SSNR according to the sub-band SNR of each sub-band and the weight of the sub-band SNR of each sub-band in the audio signal.

According to the invention, the second determining unit is specifically configured to determine a reference SSNR of the audio signal; and determine the enhanced SSNR according to the reference SSNR of the audio signal.

According to an embodiment, the second determining unit is specifically configured to determine the enhanced SSNR by using the following formula: $SSNR' = x * SSNR + y$, where SSNR indicates the reference SSNR, SSNR' indicates the enhanced SSNR, and x and y indicate enhancement parameters.

According to the invention, the first determining unit is specifically configured to determine the audio signal as a to-be-determined audio signal in a case in which it is determined that the audio signal is an unvoiced signal.

According to the method provided in the embodiments of the present invention, a feature of an audio signal may be determined, an enhanced SSNR is determined in a corresponding manner according to the feature of the audio signal, and the enhanced SSNR is compared with a VAD decision threshold, so that a proportion of miss detection of an active signal can be reduced.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for detecting an audio signal
FIG. 2 is a schematic flowchart of a method for detecting an audio signal according to an embodiment of the present invention;

FIG. 3 is a schematic flowchart of a method for detecting an audio signal according to an embodiment of the present invention;

FIG. 4 is a schematic flowchart of a method for detecting an audio signal according to an illustrative example not forming part of the invention;

FIG. 5 is a structural block diagram of an apparatus according to an embodiment of the present invention;

FIG. 6 is a structural block diagram of another apparatus according to an embodiment of the present invention;

FIG. 7 is a structural block diagram of an apparatus according to an embodiment of the present invention;

FIG. 8 is a structural block diagram of another apparatus according to an embodiment of the present invention;

FIG. 9 is a structural block diagram of another apparatus according to an illustrative example not forming part of the present invention; and

FIG. 10 is a structural block diagram of another apparatus according to an illustrative example not forming part of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

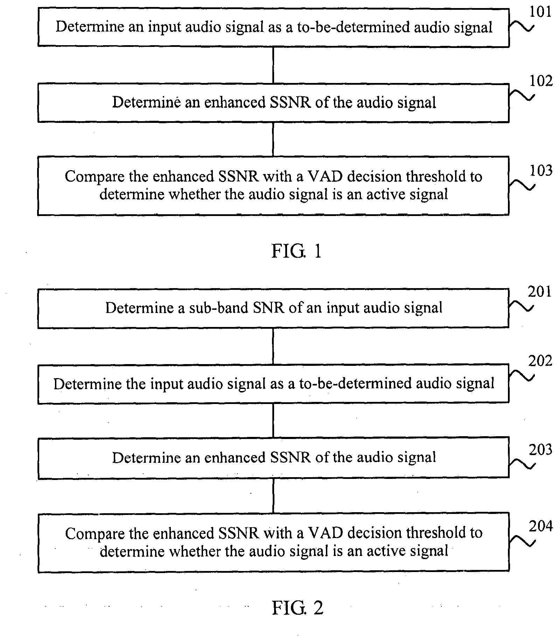

FIG. 1 is a schematic flowchart of a method for detecting an audio signal according to an embodiment of the present invention.

101. Determine an input audio signal as a to-be-determined audio signal.

102. Determine an enhanced SSNR of the audio signal, where the enhanced SSNR is greater than a reference SSNR.

103. Compare the enhanced SSNR with a VAD decision threshold to determine whether the audio signal is an active signal.

In this embodiment of the present invention, when the enhanced SSNR is compared with the VAD decision threshold, a reference VAD decision threshold may be used, or a reduced VAD decision threshold obtained after a reference VAD decision threshold is reduced by using a preset algorithm may be used. The reference VAD decision threshold may be a default VAD decision threshold, and the reference VAD decision threshold may be pre-stored, or may be temporarily obtained through calculation, where the reference VAD decision threshold may be calculated by using an existing well-known technology. When the reference VAD decision threshold is reduced by using the preset algorithm, the preset algorithm may be multiplying the reference VAD decision threshold by a coefficient that is less than 1, or another algorithm may be used. This embodiment of the present invention imposes no limitation on a used specific algorithm.

When a conventional SSNR calculation method is used to calculate SSNRs of some audio signals, the SSNRs of these audio signals may be lower than a preset VAD decision threshold. However, actually, these audio signals are active audio signals. This is caused by features of these audio signals. For example, in a case in which an environmental SNR is relatively low, a sub-band SNR of a high-frequency part is significantly reduced. In addition, because a psychoacoustic theory is generally used to perform sub-band division, the sub-band SNR of the high-frequency part has relatively low contribution to an SSNR. In this case, for some signals, such as an unvoiced signal, whose energy is mainly centralized at a relatively high frequency part, an SSNR obtained through calculation by using the conventional SSNR calculation method may be lower than the VAD decision threshold, which causes miss detection of an active signal. For another example, for some audio signals, distribution of energy of these audio signals is relatively flat on a spectrum but overall energy of these audio signals is relatively low. Therefore, in the case in which an environmental SNR is relatively low, an SSNR obtained through calculation by using the conventional SSNR calculation method may be lower than the VAD decision threshold. In the method shown in FIG. 1, a manner of properly increasing an SSNR is used, so that the SSNR may be greater than a VAD decision threshold. Therefore, a proportion of miss detection of an active signal can be effectively reduced.

FIG. 2 is a schematic flowchart of a method for detecting an audio signal according to an embodiment of the present invention.

201. Determine a sub-band SNR of an input audio signal.

A spectrum of the input audio signal is divided into N sub-bands, where N is a positive integer greater than 1. Specifically, a psychoacoustic theory may be used to divide the spectrum of the audio signal. In a case in which the psychoacoustic theory is used to divide the spectrum of the audio signal, a width of a sub-band closer to a low frequency is narrower, and a width of a sub-band closer to a high frequency is wider. Certainly, the spectrum of the audio signal may also be divided in another manner, for example, a manner of evenly dividing the spectrum of the audio signal into N sub-bands. A sub-band SNR of each sub-band of the input audio signal is calculated, where the sub-band SNR is a ratio of energy of the sub-band to energy of background noise on the sub-band. The energy of the background noise on the sub-band generally is an estimated value obtained by estimation by a background noise estimator. How to use the background noise estimator to estimate background noise energy corresponding to each sub-band is a well-known technology of this field. Therefore, no details need to be described herein. A person skilled in the art may understand that the sub-band SNR may be a direct energy ratio, or may be another expression manner of a direct energy ratio, such as a logarithmic sub-band SNR. In addition, a person skilled in the art may further understand that the sub-band SNR may also be a sub-band SNR obtained after linear or nonlinear processing is performed on a direct sub-band SNR, or may be another transformation of the sub-band SNR. The direct energy ratio of the sub-band SNR is shown in the following formula:

$$snr(k) = E(k) / En(k)$$

<div align="right">Formula 1.2</div>

where snr(k) indicates a sub-band SNR of the $k^{th}$ sub-band, and E(k) and En(k) respectively indicate energy of the $k^{th}$ sub-band and energy of background noise on the $k^{th}$ sub-band. A logarithmic sub-band SNR may be indicated as: $snr_{log}(k)=10 \times log_{10}snr(k)$, where $snr_{log}(k)$ indicates a logarithmic sub-band SNR of the $k^{th}$ sub-band, and snr(k) indicates a sub-band SNR that is of the $k^{th}$ sub-band and obtained through calculation by using formula 1.2. A person skilled in the art may further understand that sub-band energy used to calculate a sub-band SNR may be energy of the input audio signal on a sub-band, or may be energy obtained after energy of the background noise on a sub-band is subtracted from energy of the input audio signal on the sub-band. Calculation of the SNR is proper without departing from meaning of the SNR.

202. Determine the input audio signal as a to-be-determined audio signal.

According to the invention, whether the input audio signal is a to-be-determined audio signal may be determined by determining whether the input audio signal is an unvoiced signal. Specifically, the determining the input audio signal as a to-be-determined audio signal includes: determining the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a time-domain zero-crossing rate (ZCR) of the audio signal. Specifically, in a case in which the ZCR of the audio signal is greater than a ZCR threshold, it is determined that the audio signal is an unvoiced signal, where the ZCR threshold is determined according to a large quantity of experiments.

203. Determine an enhanced SSNR of the audio signal, where the enhanced SSNR is greater than a reference SSNR.

The reference SSNR may be an SSNR obtained through calculation by using formula 1.1. It can be seen from formula 1.1 that weighting processing is not performed on a sub-band SNR of any sub-band when the reference SSNR is being calculated, that is, weights of sub-band SNRs of all sub-bands are equal when the reference SSNR is being calculated.

Optionally, in an embodiment, in a case in which the quantity of high-frequency portion sub-bands that are in the audio signal and whose sub-band SNRs are greater than the first preset threshold is greater than the first quantity, or in a case in which the quantity of high-frequency portion sub-bands that are in the audio signal and whose sub-band SNRs are greater than the first preset threshold is greater than the second quantity, and the quantity of low-frequency portion sub-bands that are in the audio signal and whose sub-band SNRs are less than the second preset threshold is greater than the third quantity, the determining an enhanced SSNR of the audio signal includes: determining a weight of a sub-band SNR of each sub-band in the audio signal, where a weight of a high-frequency portion sub-band whose sub-band SNR is greater than the first preset threshold is greater than a weight of a sub-band SNR of another sub-band; and determining the enhanced SSNR according to the sub-band SNR of each sub-band and the weight of the sub-band SNR of each sub-band in the audio signal.

For example, if the audio signal is divided into 20 sub-bands, that is, sub-band 0 to sub-band 19, according to the psychoacoustic theory, and signal-to-noise ratios of sub-band 18 and sub-band 19 are both greater than a first preset value T1, four sub-bands, that is, sub-band 20 to sub-band 23, may be added. Specifically, sub-band 18 and sub-band 19 whose signal-to-noise ratios are greater than T1 may be respectively divided into sub-band 18a, sub-band 18b, and sub-band 18c; and sub-band 19a, sub-band 19b, and sub-band 19c. In this case, sub-band 18 may be considered as a mother sub-band of sub-band 18a, sub-band 18b, and sub-band 18c, and sub-band 19 may be considered as a mother sub-band of sub-band 19a, sub-band 19b, and sub-band 19c. Values of signal-to-noise ratios of sub-band 18a, sub-band 18b, and sub-band 18c are the same as a value of the signal-to-noise ratio of their mother sub-band, and values of signal-to-noise ratios of sub-band 19a, sub-band 19b, and sub-band 19c are the same as a value of the signal-to-noise ratio of their mother sub-band. In this way, the 20 sub-bands that are originally obtained through division are re-divided into 24 sub-bands. Because VAD is designed still according to the 20 sub-bands during active signal detection, the 24 sub-bands need to be mapped back to the 20 sub-bands to determine the enhanced SSNR. In conclusion, when the enhanced SSNR is determined by increasing the quantity of high-frequency portion sub-bands whose sub-band SNRs are greater than the first preset threshold, calculation may be performed by using the following formula:

$$SSNR' = \frac{20}{24} \times \left[ 2 \times \left( snr(18) + snr(19) \right) + \sum_{k=0}^{19} snr(k) \right] \qquad \text{Formula 1.3}$$

where *SSNR'* indicates the enhanced SSNR, and snr(k) indicates a sub-band SNR of the $k^{th}$ sub-band.

If an SSNR obtained through calculation by using formula 1.1 is the reference SSNR, the reference SSNR obtained through calculation is $\sum_{k=0}^{19} snr(k)$ . Obviously, for an audio signal of a first type, a value of the enhanced SSNR obtained through calculation by using formula 1.3 is greater than a value of the reference SSNR obtained through calculation by using formula 1.1.

For another example, if the audio signal is divided into 20 sub-bands, that is, sub-band 0 to sub-band 19, according to the psychoacoustic theory, snr(18) and snr(19) are both greater than a first preset value T1, and snr(0) to snr(17) are all less than a second preset threshold T2, the enhanced SSNR may be determined by using the following:

$$SSNR' = a_1 \times snr(18) + a_2 \times snr(19) + \sum_{k=0}^{17} snr(k) \qquad \text{Formula 1.4}$$

where *SSNR'* indicates the enhanced SSNR, snr(k) indicates a sub-band SNR of the $k^{th}$ sub-band, $a_1$ and $a_2$ are weight increasing parameters, and values of $a_1$ and $a_2$ make $a_1 \times snr(18) + a_2 \times snr(19)$ greater than $snr(18) + snr(19)$. Obviously, a value of the enhanced SSNR obtained through calculation by using formula 1.4 is greater than the value of the reference SSNR obtained through calculation by using formula 1.1.

Optionally, in another embodiment, the determining an enhanced SSNR of the audio signal includes: determining a reference SSNR of the audio signal, and determining the enhanced SSNR according to the reference SSNR of the audio signal.

Optionally, the enhanced SSNR may be determined by using the following formula:

$$SSNR' = x * SSNR + y \qquad \text{Formula 1.5}$$

where SSNR indicates the reference SSNR of the audio signal, SSNR' indicates the enhanced SSNR, and x and y indicate enhancement parameters. For example, a value of x may be 1.05, and a value of y may be 1. A person skilled in the art may understand that, values of x and y may be other proper values that make the enhanced SSNR greater than the reference SSNR properly.

Optionally, the enhanced SSNR may be determined by using the following formula:

$$SSNR' = f(x) * SSNR + h(y) \qquad \text{Formula 1.6}$$

where SSNR indicates an original SSNR of the audio signal, SSNR' indicates the enhanced SSNR, and f(x) and h(y) indicate enhancement functions. For example, f(x) and h(y) may be functions related to a long-term signal-to-noise ratio (LSNR) of the audio signal, where the LSNR of the audio signal is an average SNR or a weighted SNR within a relatively long period of time. For example, when the lsnr is greater than 20, f(lsnr) may be equal to 1.1, and y(lsnr) may be equal to 2; when the lsnr is less than 20 and greater than 15, f(lsnr) may be equal to 1.05, and y(lsnr) may be equal to 1; and when the lsnr is less than 15, f(lsnr) may be equal to 1, and y(lsnr) may be equal to 0. A person skilled in the art may understand that, f(x) and h(y) may be in other proper forms that make the enhanced SSNR greater than the reference SSNR properly.

204. Compare the enhanced SSNR with a VAD decision threshold to determine whether the audio signal is an active signal.

Specifically, when the enhanced SSNR is compared with the VAD decision threshold, if the enhanced SSNR is greater than the VAD decision threshold, it is determined that the audio signal is an active signal; or if the enhanced SSNR is not greater than the VAD decision threshold, it is determined that the audio signal is an inactive signal.

Optionally, in another embodiment, before the comparing the enhanced SSNR with a VAD decision threshold, the method may further include: using a preset algorithm to reduce the VAD decision threshold, so as to obtain a reduced VAD decision threshold. In this case, the comparing the enhanced SSNR with a VAD decision threshold specifically includes: comparing the enhanced SSNR with the reduced VAD decision threshold to determine whether the audio signal is an active signal. A reference VAD decision threshold may be a default VAD decision threshold, and the reference VAD decision threshold may be pre-stored, or may be temporarily obtained through calculation, where the reference VAD decision threshold may be calculated by using an existing well-known technology. When the reference VAD decision threshold is reduced by using the preset algorithm, the preset algorithm may be multiplying the reference VAD decision threshold by a coefficient that is less than 1, or another algorithm may be used. This embodiment of the present invention imposes no limitation on a used specific algorithm. The VAD decision threshold may be properly reduced by using the preset algorithm, so that the enhanced SSNR is greater than the reduced VAD decision threshold. Therefore, a proportion of miss detection of an active signal can be reduced.

According to the method shown in FIG. 2, a feature of an audio signal is determined, an enhanced SSNR is determined in a corresponding manner according to the feature of the audio signal, and the enhanced SSNR is compared with a VAD decision threshold. In this way, a proportion of miss detection of an active signal can be reduced.

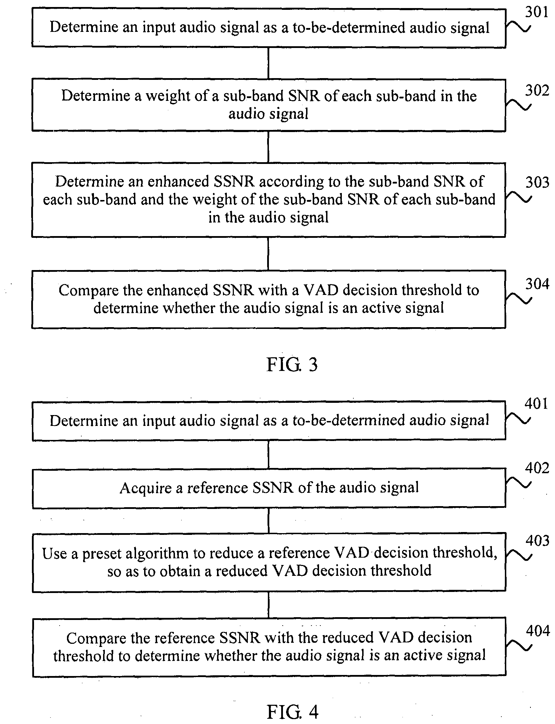

FIG. 3 is a schematic flowchart of a method for detecting an audio signal according to an embodiment of the present invention.

301. Determine an input audio signal as a to-be-determined audio signal.

302. Determine a weight of a sub-band SNR of each sub-band in the audio signal, where a weight of a sub-band SNR of a high-frequency portion sub-band whose sub-band SNR is greater than a first preset threshold is greater than a weight of a sub-band SNR of another sub-band.

303. Determine an enhanced SSNR according to the sub-band SNR of each sub-band and the weight of the sub-band SNR of each sub-band in the audio signal, where the enhanced SSNR is greater than a reference SSNR.

The reference SSNR may be an SSNR obtained through calculation by using formula 1.1. It can be seen from formula 1.1 that weighting processing is not performed on a sub-band SNR of any sub-band when the reference SSNR is being calculated, that is, weights of sub-band SNRs of all sub-bands are equal when the reference SSNR is being calculated.

For example, if the audio signal is divided into 20 sub-bands, that is, sub-band 0 to sub-band 19, according to a psychoacoustic theory, and signal-to-noise ratios of sub-band 18 and sub-band 19 are both greater than a first preset value T1, four sub-bands, that is, sub-band 20 to sub-band 23, may be added. Specifically, sub-band 18 and sub-band 19 whose signal-to-noise ratios are greater than T1 may be respectively divided into sub-band 18a, sub-band 18b, and sub-band 18c; and sub-band 19a, sub-band 19b, and sub-band 19c. In this case, sub-band 18 may be considered as a mother sub-band of sub-band 18a, sub-band 18b, and sub-band 18c, and sub-band 19 may be considered as a mother sub-band of sub-band 19a, sub-band 19b, and sub-band 19c. Values of signal-to-noise ratios of sub-band 18a, sub-band 18b, and sub-band 18c are the same as a value of the signal-to-noise ratio of their mother sub-band, and values of signal-to-noise ratios of sub-band 19a, sub-band 19b, and sub-band 19c are the same as a value of the signal-to-noise ratio of their mother sub-band. In this way, the 20 sub-bands that are originally obtained through division are re-divided into 24 sub-bands. Because VAD is designed still according to the 20 sub-bands during active signal detection, the 24 sub-bands need to be mapped back to the 20 sub-bands to determine the enhanced SSNR. In conclusion, when the enhanced SSNR is determined by increasing a quantity of high-frequency portion sub-bands whose sub-band SNRs are greater than the first preset threshold, calculation may be performed by using the following formula:

$$SSNR' = \frac{20}{24} \times \left[ 2 \times \left( snr(18) + snr(19) \right) + \sum_{k=0}^{19} snr(k) \right] \qquad \text{Formula 1.3}$$

where *SSNR'* indicates the enhanced SSNR, and snr(k) indicates a sub-band SNR of the k<sup>th</sup> sub-band.

If an SSNR obtained through calculation by using formula 1.1 is the reference SSNR, the reference SSNR obtained through calculation is $\sum_{k=0}^{19} snr(k)$. Obviously, for an audio signal of a first type, a value of the enhanced SSNR obtained through calculation by using formula 1.3 is greater than a value of the reference SSNR obtained through calculation by using formula 1.1.

For another example, if the audio signal is divided into 20 sub-bands, that is, sub-band 0 to sub-band 19, according to the psychoacoustic theory, snr(18) and snr(19) are both greater than a first preset value T1, and snr(0) to snr(17) are all less than a second preset threshold T2, the enhanced SSNR may be determined by using the following formula:

$$SSNR' = a_1 \times snr(18) + a_2 \times snr(19) + \sum_{k=0}^{17} snr(k) \qquad \text{Formula 1.4}$$

where *SSNR'* indicates the enhanced SSNR, snr(k) indicates a sub-band SNR of the $k^{th}$ sub-band, $a_1$ and $a_2$ are weight increasing parameters, and values of $a_1$ and $a_2$ make $a_1 \times snr(18) + a_2 \times snr(19)$ greater than $snr(18) + snr(19)$. Obviously, a value of the enhanced SSNR obtained through calculation by using formula 1.4 is greater than the value of the reference SSNR obtained through calculation by using formula 1.1.

304. Compare the enhanced SSNR with a VAD decision threshold to determine whether the audio signal is an active signal.

Specifically, when the enhanced SSNR is compared with the VAD decision threshold, if the enhanced SSNR is greater than the VAD decision threshold, it is determined that the audio signal is an active signal; or if the enhanced SSNR is not greater than the VAD decision threshold, it is determined that the audio signal is an inactive signal.

According to the method shown in FIG. 3, a feature of an audio signal may be determined, an enhanced SSNR is determined in a corresponding manner according to the feature of the audio signal, and the enhanced SSNR is compared with a VAD decision threshold. Therefore, a proportion of miss detection of an active signal can be reduced.

Further, the determining an input audio signal as a to-be-determined audio signal includes: determining the audio signal as a to-be-determined audio signal according to a sub-band SNR of the audio signal.

In embodiments of FIG. 1 to FIG. 3, whether an input audio signal is an active signal is determined in a manner of using an enhanced SSNR. In a method shown in FIG. 4, whether an input audio signal is an active signal is determined in a manner of reducing a VAD decision threshold.

FIG. 4 is a schematic flowchart of a method for detecting an audio signal according to an illustrative example not forming part of the invention.

401. Determine an input audio signal as a to-be-determined audio signal.

Optionally, the determining an input audio signal as a to-be-determined audio signal includes: determining the audio signal as a to-be-determined audio signal according to the sub-band SNR that is of the audio

Optionally, in a case in which the audio signal is determined as a to-be-determined audio signal according to the sub-band SNR of the audio signal, the determining an input audio signal as a to-be-determined audio signal includes: determining the audio signal as a to-be-determined audio signal in a case in which a quantity of high-frequency portion sub-bands that are in the audio signal and whose sub-band SNRs are greater than a first preset threshold is greater than a first quantity.

Optionally, in a case in which the audio signal is determined as a to-be-determined audio signal according to the sub-band SNR of the audio signal, the determining an input audio signal as a to-be-determined audio signal includes: determining the audio signal as a to-be-determined audio signal in a case in which a quantity of high-frequency portion sub-bands that are in the audio signal and whose sub-band SNRs are greater than a first preset threshold is greater than a second quantity, and a quantity of low-frequency portion sub-bands that are in the audio signal and whose sub-band SNRs are less than a second preset threshold is greater than a third quantity.

Optionally, in a case in which the audio signal is determined as a to-be-determined audio signal according to the sub-band SNR of the audio signal, the determining an input audio signal as a to-be-determined audio signal includes: determining the audio signal as a to-be-determined audio signal in a case in which a quantity of sub-bands that are in the audio signal and whose values of sub-band SNRs are greater than a third preset threshold is greater than a fourth quantity.

The first preset threshold and the second preset threshold may be obtained by means of statistics collection according to a large quantity of voice samples. Specifically, statistics about sub-band SNRs of high-frequency portion sub-bands are collected in a large quantity of unvoiced voice samples including background noise, and the first preset threshold is determined according to the sub-band SNRs, so that sub-band SNRs of most of the high-frequency portion sub-bands in these unvoiced samples are greater than the first preset threshold. Similarly, statistics about sub-band SNRs of low-frequency portion sub-bands are collected in these unvoiced voice samples, and the second preset threshold is determined according to the sub-band SNRs, so that sub-band SNRs of most of the low-frequency portion sub-bands in these unvoiced voice samples are less than the second preset threshold.

The third preset threshold is also obtained by means of statistics collection. Specifically, the third preset threshold is determined according to sub-band SNRs of a large quantity of noise signals, so that sub-band SNRs of most of sub-bands in these noise signals are less than the third preset threshold.

The first quantity, the second quantity, the third quantity, and the fourth quantity are also obtained by means of statistics collection. The first quantity is used as an example, where in a large quantity of unvoiced voice sample frames including noise, statistics about a sub-band quantity of high-frequency portion sub-bands whose sub-band SNRs are greater than the first preset threshold are collected, and the first quantity is determined according to the quantity, so that a quantity of high-frequency portion sub-bands that are in most of these unvoiced voice sample frames and whose sub-band SNRs are greater than the first preset threshold is greater than the first quantity. A method for acquiring the second quantity is similar to a method for acquiring the first quantity. The second quantity may be the same as the first quantity, or the second quantity may be different from the first quantity. Similarly, for the third quantity, in the large quantity of unvoiced voice sample frames including noise, statistics about a sub-band quantity of low-frequency portion sub-bands whose sub-band SNRs are less than the second preset threshold are collected, and the third quantity is determined according to the quantity, so that a quantity of low-frequency portion sub-bands that are in most of these unvoiced voice sample frames and whose sub-band SNRs are less than the second preset threshold is greater than the third quantity. For the fourth quantity, in a large quantity of noise signal frames, statistics about a quantity of sub-bands whose sub-band SNRs are less than the third preset threshold are collected, and the fourth quantity is determined according to the quantity, so that a quantity of sub-bands that are in most of these noise sample frames and whose sub-band SNRs are less than the third preset threshold is greater than the fourth quantity

Optionally, whether the input audio signal is a to-be-determined audio signal may be determined by determining whether the input audio signal is an unvoiced signal. In this case, the sub-band SNR of the audio signal does not need to be determined when whether the audio signal is a to-be-determined audio signal is being determined. In other words, step 201 does not need to be performed when whether the audio signal is a to-be-determined audio signal is being determined. Specifically, the determining an input audio signal as a to-be-determined audio signal includes: determining the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a time-domain ZCR of the audio signal. Specifically, in a case in which the ZCR of the audio signal is greater than a ZCR threshold, it is determined that the audio signal is an unvoiced signal, where the ZCR threshold is determined according to a large quantity of experiments.

402. Acquire a reference SSNR of the audio signal.

Specifically, the reference SSNR may be an SSNR obtained through calculation by using formula 1.1.

403. Use a preset algorithm to reduce a reference VAD decision threshold, so as to obtain a reduced VAD decision threshold.

Specifically, the reference VAD decision threshold may be a default VAD decision threshold, and the reference VAD decision threshold may be pre-stored, or may be temporarily obtained through calculation, where the reference VAD decision threshold may be calculated by using an existing well-known technology. When the reference VAD decision threshold is reduced by using the preset algorithm, the preset algorithm may be multiplying the reference VAD decision threshold by a coefficient that is less than 1, or another algorithm may be used. This embodiment of the present invention imposes no limitation on a used specific algorithm. The VAD decision threshold may be properly reduced by using the preset algorithm, so that an enhanced SSNR is greater than the reduced VAD decision threshold. Therefore, a proportion of miss detection of an active signal can be reduced.

404. Compare the reference SSNR with the reduced VAD decision threshold to determine whether the audio signal is an active signal.

When a conventional SSNR calculation method is used to calculate SSNRs of some audio signals, the SSNRs of these audio signals may be lower than a preset VAD decision threshold. However, actually, these audio signals are active audio signals. This is caused by features of these audio signals. For example, in a case in which an environmental SNR is relatively low, a sub-band SNR of a high-frequency part is significantly reduced. In addition, because a psychoacoustic theory is generally used to perform sub-band division, the sub-band SNR of the high-frequency part has relatively low contribution to an SSNR. In this case, for some signals, such as an unvoiced signal, whose energy is mainly centralized at a relatively high frequency part, an SSNR obtained through calculation by using the conventional SSNR calculation method may be lower than the VAD decision threshold, which causes miss detection of an active signal. For another example, for some audio signals, distribution of energy of these audio signals is relatively flat on a spectrum but overall energy of these audio signals is relatively low. Therefore, in the case in which an environmental SNR is relatively low, an SSNR obtained through calculation by using the conventional SSNR calculation method may be lower than the VAD decision threshold. In the method shown in FIG. 4, a manner of reducing a VAD decision threshold is used, so that an SSNR obtained through calculation by using the conventional SSNR calculation method is greater than the VAD decision threshold. Therefore, a proportion of miss detection of an active signal can be effectively reduced.

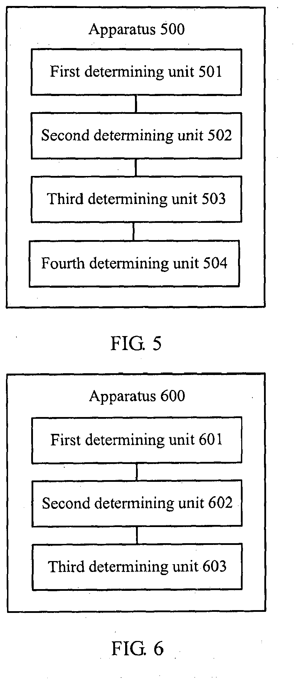

FIG. 5 is a structural block diagram of an apparatus according to an embodiment of the present invention. The apparatus shown in FIG. 5 can perform all steps shown in FIG. 1 or FIG. 2. As shown in FIG. 5, an apparatus 500 includes a first determining unit 501, a second determining unit 502, and a third determining unit 503.

The first determining unit 501 is configured to determine an input audio signal as a to-be-determined audio signal.

The second determining unit 502 is configured to determine an enhanced segmental signal-to-noise ratio (SSNR) of the audio signal, where the enhanced SSNR is greater than a reference SSNR.

The third determining unit 503 is configured to compare the enhanced SSNR with a voice activity detection (VAD) decision threshold to determine whether the audio signal is an active signal.

The apparatus 500 shown in FIG. 5 may determine a feature of an input audio signal, determine an enhanced SSNR in a corresponding manner according to the feature of the audio signal, and compare the enhanced SSNR with a VAD decision threshold, so that a proportion of miss detection of an active signal can be reduced.

According to the invention, the first determining unit 501 is specifically configured to determine the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a time-domain ZCR of the audio signal. Specifically, in a case in which the ZCR of the audio signal is greater than a ZCR threshold, it is determined that the audio signal is an unvoiced signal, where the ZCR threshold is determined according to a large quantity of experiments.

Further, the second determining unit 502 is specifically configured to determine a weight of a sub-band SNR of each sub-band in the audio signal, where a weight of a high-frequency portion sub-band whose sub-band SNR is greater than the first preset threshold is greater than a weight of a sub-band SNR of another sub-band, and determine the enhanced SSNR according to the SNR of each sub-band and the weight of the sub-band SNR of each sub-band in the audio signal.

According the the invention, the second determining unit 502 is specifically configured to determine a reference SSNR of the audio signal, and determine the enhanced SSNR according to the reference SSNR of the audio signal.

The reference SSNR may be an SSNR obtained through calculation by using formula 1.1. When the reference SSNR is being calculated, weights of sub-band SNRs that are of all sub-bands and that are included in the SSNR are the same in the SSNR.

Optionally, in another embodiment, the second determining unit 502 is specifically configured to determine the enhanced SSNR by using the following formula:

$$SSNR' = x * SSNR + y \qquad \text{Formula 1.7}$$

where SSNR indicates the reference SSNR, SSNR' indicates the enhanced SSNR, and x and y indicate enhancement parameters. For example, a value of x may be 1.05, and a value of y may be 1. A person skilled in the art may understand that, values of x and y may be other proper values that make the enhanced SSNR greater than the reference SSNR properly.

Optionally, in another embodiment, the second determining unit 502 is specifically configured to determine the enhanced SSNR by using the following formula:

$$SSNR' = f(x) * SSNR + h(y) \qquad \text{Formula 1.8}$$

where SSNR indicates the reference SSNR, SSNR' indicates the enhanced SSNR, and f(x) and h(y) indicate enhancement functions. For example, f(x) and h(y) may be functions related to a LSNR of the audio signal, where the LSNR of the audio signal is an average SNR or a weighted SNR within a relatively long period of time. For example, when the lsnr is greater than 20, f(lsnr) may be equal to 1.1, and y(lsnr) may be equal to 2; when the lsnr is less than 20 and greater than 15, f(lsnr) may be equal to 1.05, and y(lsnr) may be equal to 1; and when the lsnr is less than 15, f(lsnr) may be equal to 1, and y(lsnr) may be equal to 0. A person skilled in the art may understand that, f(x) and h(y) may be in other proper forms that make the enhanced SSNR greater than the reference SSNR properly.

The third determining unit 503 is specifically configured to compare the enhanced SSNR with the VAD decision threshold to determine, according to a result of the comparison, whether the audio signal is an active signal. Specifically, if the enhanced SSNR is greater than the VAD decision threshold, it is determined that the audio signal is an active signal, or if the enhanced SSNR is less than the VAD decision threshold, it is determined that the audio signal is an inactive signal.

Optionally, in another embodiment, a preset algorithm may also be used to reduce a reference VAD decision threshold to obtain a reduced VAD decision threshold, and the reduced VAD decision threshold is used to determine whether the audio signal is an active signal. In this case, the apparatus 500 may further include a fourth determining unit 504, where the fourth determining unit 504 is configured to use a preset algorithm to reduce the VAD decision threshold, so as to obtain a reduced VAD decision threshold. In this case, the third determining unit 503 is specifically configured to compare the enhanced SSNR with the reduced VAD decision threshold to determine whether the audio signal is an active signal.

FIG. 6 is a structural block diagram of another apparatus according to an embodiment of the present invention. The apparatus shown in FIG. 6 can perform all steps shown in FIG. 3. As shown in FIG. 6, an apparatus 600 includes a first determining unit 601, a second determining unit 602, and a third determining unit 603.

The first determining unit 601 is configured to determine an input audio signal as a to-be-determined audio signal.

The second determining unit 602 is configured to determine a weight of a sub-band SNR of each sub-band in the audio signal, where a weight of a sub-band SNR of a high-frequency portion sub-band whose sub-band SNR is greater than a first preset threshold is greater than a weight of a sub-band SNR of another sub-band, and determine an enhanced SSNR according to the sub-band SNR of each sub-band and the weight of the sub-band SNR of each sub-band in the audio signal, where the enhanced SSNR is greater than a reference SSNR.

The third determining unit 603 is configured to compare the enhanced SSNR with a VAD decision threshold to determine whether the audio signal is an active signal.

The apparatus 600 shown in FIG. 6 may determine a feature of an input audio signal, determine an enhanced SSNR in a corresponding manner according to the feature of the audio signal, and compare the enhanced SSNR with a VAD decision threshold, so that a proportion of miss detection of an active signal can be reduced.

Further, the first determining unit 601 is specifically configured to determine the audio signal as a to-be-determined audio signal according to a sub-band SNR of the audio signal.

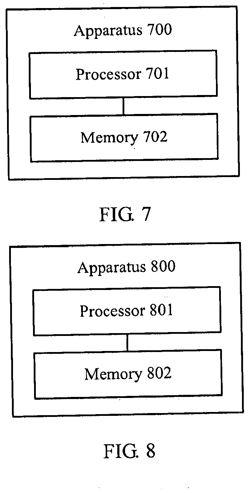

FIG. 7 is a structural block diagram of an apparatus according to an embodiment of the present invention. The apparatus shown in FIG. 7 can perform all steps shown in FIG. 1 or FIG. 2. As shown in FIG. 7, an apparatus 700 includes a processor 701 and a memory 702. The processor 701 may be a general-purpose processor, a digital signal processor (DSP), an application specific integrated circuit (ASIC), a field programmable gate array (FPGA) or another programmable logic component, a discrete gate or a transistor logic component, or a discrete hardware component, which may implement or perform the methods, the steps, and the logical block diagrams disclosed in the embodiments of the present invention. The general-purpose processor may be a microprocessor or the processor may be any conventional processor or the like. The steps of the methods disclosed in the embodiments of the present invention may be directly executed by a hardware decoding processor, or executed by a combination of hardware and software modules in a decoding processor. The software module may be located in a mature storage medium in the art, such as a random access memory (RAM), a flash memory, a read-only memory (ROM), a programmable read-only memory, an electrically-erasable programmable memory, or a register. The storage medium is located in the memory 702. The processor 701 reads an instruction from the memory 702, and completes the steps of the foregoing methods in combination with the hardware.

The processor 701 is configured to determine an input audio signal as a to-be-determined audio signal.

The processor 701 is configured to determine an enhanced SSNR of the audio signal, where the enhanced SSNR is greater than a reference SSNR.

The processor 701 is configured to compare the enhanced SSNR with a VAD decision threshold to determine whether the audio signal is an active signal.

The apparatus 700 shown in FIG. 7 may determine a feature of an input audio signal, determine an enhanced SSNR in a corresponding manner according to the feature of the audio signal, and compare the enhanced SSNR with a VAD decision threshold, so that a proportion of miss detection of an active signal can be reduced.

According to the invention, the processor 701 is specifically configured to determine the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a time-domain ZCR of the audio signal. Specifically, in a case in which the ZCR of the audio signal is greater than a ZCR threshold, it is determined that the audio signal is an unvoiced signal, where the ZCR threshold is determined according to a large quantity of experiments.

Further, the processor 701 is specifically configured to determine a weight of a sub-band SNR of each sub-band in the audio signal, where a weight of a high-frequency portion sub-band whose sub-band SNR is greater than the first preset threshold is greater than a weight of a sub-band SNR of another sub-band, and determine the enhanced SSNR according to the SNR of each sub-band and the weight of the sub-band SNR of each sub-band in the audio signal.

According to the invention, the processor 701 is specifically configured to determine a reference SSNR of the audio signal, and determine the enhanced SSNR according to the reference SSNR of the audio signal.

The reference SSNR may be an SSNR obtained through calculation by using formula 1.1. When the reference SSNR is being calculated, weights of sub-band SNRs that are of all sub-bands and that are included in the SSNR are the same in the SSNR.

Optionally, in another embodiment, the processor 701 is specifically configured to determine the enhanced SSNR by using the following formula:

$$SSNR' = x * SSNR + y \qquad \text{Formula 1.7}$$

where SSNR indicates' the reference SSNR, SSNR' indicates the enhanced SSNR, and x and y indicate enhancement parameters. For example, a value of x may be 1.07, and a value of y may be 1. A person skilled in the art may understand that, values of x and y may be other proper values that make the enhanced SSNR greater than the reference SSNR properly.

Optionally, in another embodiment, the processor 701 is specifically configured to determine the enhanced SSNR by using the following formula:

$$SSNR' = f(x) * SSNR + h(y) \qquad \text{Formula 1.8}$$

where SSNR indicates the reference SSNR, SSNR' indicates the enhanced SSNR, and f(x) and h(y) indicate enhancement functions. For example, f(x) and h(y) may be functions related to a LSNR of the audio signal, where the LSNR of the audio signal is an average SNR or a weighted SNR within a relatively long period of time. For example, when the lsnr is greater than 20, f(lsnr) may be equal to 1.1, and y(lsnr) may be equal to 2; when the lsnr is less than 20 and greater than 17, f(lsnr) may be equal to 1.07, and y(lsnr) may be equal to 1; and when the lsnr is less than 17, f(lsnr) may be equal to 1, and y(lsnr) may be equal to 0. A person skilled in the art may understand that, f(x) and h(y) may be in other proper forms that make the enhanced SSNR greater than the reference SSNR properly.

The processor 701 is specifically configured to compare the enhanced SSNR with the VAD decision threshold to determine, according to a result of the comparison, whether the audio signal is an active signal. Specifically, if the enhanced SSNR is greater than the VAD decision threshold, it is determined that the audio signal is an active signal, or if the enhanced SSNR is less than the VAD decision threshold, it is determined that the audio signal is an inactive signal.

Optionally, in another embodiment, a preset algorithm may also be used to reduce a reference VAD decision threshold to obtain a reduced VAD decision threshold, and the reduced VAD decision threshold is used to determine whether the audio signal is an active signal. In this case, the processor 701 may be further configured to use a preset algorithm to reduce the VAD decision threshold, so as to obtain a reduced VAD decision threshold. In this case, the processor 701 is specifically configured to compare the enhanced SSNR with the reduced VAD decision threshold to determine whether the audio signal is an active signal.

FIG. 8 is a structural block diagram of another apparatus according to an embodiment of the present invention. The apparatus shown in FIG. 8 can perform all steps shown in FIG. 3. As shown in FIG. 8, an apparatus 800 includes a processor 801 and a memory 802. The processor 801 may be a general-purpose processor, a DSP, an ASIC, a FPGA or another programmable logic component, a discrete gate or a transistor logic component, or a discrete hardware component, which may implement or perform the methods, the steps, and the logical block diagrams disclosed in the embodiments of the present invention. The general-purpose processor may be a microprocessor or the processor may be any conventional processor, or the like. The steps of the methods disclosed in the embodiments of the present invention may be directly executed by a hardware decoding processor, or executed by a combination of hardware and software modules in a decoding processor. The software module may be located in a mature storage medium in the art, such as a RAM, a flash memory, a ROM, a programmable read-only memory, an electrically-erasable programmable memory, or a register. The storage medium is located in the memory 802. The processor 801 reads an instruction from the memory 802, and completes the steps of the foregoing methods in combination with the hardware.

The processor 801 is configured to determine an input audio signal as a to-be-determined audio signal.

The processor 801 is configured to determine a weight of a sub-band SNR of each sub-band in the audio signal, where a weight of a sub-band SNR of a high-frequency portion sub-band whose sub-band SNR is greater than a first preset threshold is greater than a weight of a sub-band SNR of another sub-band, and determine an enhanced SSNR according to the sub-band SNR of each sub-band and the weight of the sub-band SNR of each sub-band in the audio signal, where the enhanced SSNR is greater than a reference SSNR.

The processor 801 is configured to compare the enhanced SSNR with a VAD decision threshold to determine whether the audio signal is an active signal.

The apparatus 800 shown in FIG. 8 may determine a feature of an input audio signal, determine an enhanced SSNR in a corresponding manner according to the feature of the audio signal, and compare the enhanced SSNR with a VAD decision threshold, so that a proportion of miss detection of an active signal can be reduced.

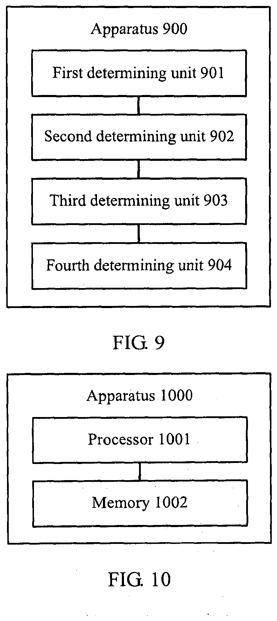

FIG. 9 is a structural block diagram of another apparatus according to an illustrative example not forming part of the present invention. An apparatus 900 shown in FIG. 9 can perform all steps shown in FIG. 4. As shown in FIG. 9, the apparatus 900 includes a first determining unit 901, a second determining unit 902, a third determining unit 903, and a fourth determining unit 904.

The first determining unit 901 is configured to determine an input audio signal as a to-be-determined audio signal.

The second determining unit 902 is configured to acquire a reference SSNR of the audio signal.

Specifically, the reference SSNR may be an SSNR obtained through calculation by using formula 1.1.

The third determining unit 903 is configured to use a preset algorithm to reduce a reference VAD decision threshold, so as to obtain a reduced VAD decision threshold.

Specifically, the reference VAD decision threshold may be a default VAD decision threshold, and the reference VAD decision threshold may be pre-stored, or may be temporarily obtained through calculation, where the reference VAD decision threshold may be calculated by using an existing well-known technology. When the reference VAD decision threshold is reduced by using the preset algorithm, the preset algorithm may be multiplying the reference VAD decision threshold by a coefficient that is less than 1, or another algorithm may be used. This example imposes no limitation on a used specific algorithm. The VAD decision threshold may be properly reduced by using the preset algorithm, so that the enhanced SSNR is greater than the reduced VAD decision threshold. Therefore, a proportion of miss detection of an active signal can be reduced.

The fourth determining unit 904 is configured to compare the reference SSNR with the reduced VAD decision threshold to determine whether the audio signal

Optionally, the first determining unit 901 is specifically configured to determine the audio signal as a to-be-determined audio signal according to a sub-band SNR of the audio signal.

Optionally, in a case in which the first determining unit 901 determines the audio signal as a to-be-determined audio signal according to the sub-band SNR of the audio signal, the first determining unit 901 is specifically configured to determine the audio signal as a to-be-determined audio signal in a case in which a quantity of high-frequency portion sub-bands that are in the audio signal and whose sub-band SNRs are greater than a first preset threshold is greater than a first quantity.

Optionally, in a case in which the first determining unit 901 determines the audio signal as a to-be-determined audio signal according to the sub-band SNR of the audio signal, the first determining unit 901 is specifically configured to determine the audio signal as a to-be-determined audio signal in a case in which a quantity of high-frequency portion sub-bands that are in the audio signal and whose sub-band SNRs are greater than a first preset threshold is greater than a second quantity, and a quantity of low-frequency portion sub-bands that are in the audio signal and whose sub-band SNRs are less than a second preset threshold is greater than a third quantity.

Optionally, in a case in which the first determining unit 901 determines the audio signal as a to-be-determined audio signal according to the sub-band SNR of the audio signal, the first determining unit 901 is specifically configured to determine the audio signal as a to-be-determined audio signal in a case in which a quantity of sub-bands that are in the audio signal and whose values of sub-band SNRs are greater than a third preset threshold is greater than a fourth quantity.

Optionally, the first determining unit 901 is specifically configured to determine the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a ZCR of the audio signal. Specifically, in a case in which the ZCR of the audio signal is greater than a ZCR threshold, it is determined that the audio signal is an unvoiced signal, where the ZCR threshold is determined according to a large quantity of experiments.

The first preset threshold and the second preset threshold may be obtained by means of statistics collection according to a large quantity of voice samples. Specifically, statistics about sub-band SNRs of high-frequency portion sub-bands are collected in a large quantity of unvoiced voice samples including background noise, and the first preset threshold is determined according to the sub-band SNRs, so that sub-band SNRs of most of the high-frequency portion sub-bands in these unvoiced samples are greater than the first preset threshold. Similarly, statistics about sub-band SNRs of low-frequency portion sub-bands are collected in these unvoiced voice samples, and the second preset threshold is determined according to the sub-band SNRs, so that sub-band SNRs of most of the low-frequency portion sub-bands in these unvoiced voice samples are less than the second preset threshold.

The third preset threshold is also obtained by means of statistics collection. Specifically, the third preset threshold is determined according to sub-band SNRs of a large quantity of noise signals, so that sub-band SNRs of most of sub-bands in these noise signals are less than the third preset threshold.

The first quantity, the second quantity, the third quantity, and the fourth quantity are also obtained by means of statistics collection. The first quantity is used as an example, where in a large quantity of voice samples including noise, statistics about a sub-band quantity of high-frequency portion sub-bands whose sub-band SNRs are greater than the first preset threshold are collected, and the first quantity is determined according to the quantity, so that a quantity of high-frequency portion sub-bands that are in most of these voice samples and whose sub-band SNRs are greater than the first preset threshold is greater than the first quantity. A method for determining the second quantity is similar to a method for determining the first quantity. The second quantity may be the same as the first quantity, or may be different from the first quantity. Similarly, for the third quantity, in the large quantity of voice samples including noise, statistics about a sub-band quantity of low-frequency portion sub-bands whose sub-band SNRs are greater than the second preset threshold are collected, and the third quantity is determined according to the quantity, so that a quantity of low-frequency portion sub-bands that are in most of these voice samples and whose sub-band SNRs are greater than the second preset threshold is greater than the third quantity. For the fourth quantity, in the large quantity of voice samples including noise, statistics about a quantity of sub-bands whose sub-band SNRs are greater than the third preset threshold are collected, and the fourth quantity is determined according to the quantity, so that a quantity of sub-bands that are in most of these voice samples and whose sub-band SNRs are greater than the third preset threshold is greater than the fourth quantity.

The apparatus 900 shown in FIG. 9 may determine a feature of an input audio signal, reduce a reference VAD decision threshold according to the feature of the audio signal, and compare an enhanced SSNR with a reduced VAD decision threshold, so that a proportion of miss detection of an active signal can be reduced.

FIG. 10 is a structural block diagram of another apparatus according to an illustrative example not forming part of the present invention. An apparatus 1000 shown in FIG. 10 can perform all steps shown in FIG. 4. As shown in FIG. 10, the apparatus 1000 includes a processor 1001 and a memory 1002. The processor 1001 may be a general-purpose processor, a DSP, an ASIC, a FPGA or another programmable logic component, a discrete gate or a transistor logic component, or a discrete hardware component, which may implement or perform the methods, the steps, and the logical block diagrams disclosed in the embodiments of the present invention. The general-purpose processor may be a microprocessor or the processor may be any conventional processor or the like. The steps of the methods disclosed in the embodiments of the present invention may be directly executed by a hardware decoding processor, or executed by a combination of hardware and software modules in a decoding processor. The software module may be located in a mature storage medium in the art, such as a RAM, a flash memory, a ROM, a programmable read-only memory, an electrically-erasable programmable memory, or a register. The storage medium is located in the memory 1002. The processor 1001 reads an instruction from the memory 1002, and completes the steps of the foregoing methods in combination with the hardware.

The processor 1001 is configured to determine an input audio signal as a to-be-determined audio signal.

The processor 1001 is configured to acquire a reference SSNR of the audio signal.

Specifically, the reference SSNR may be an SSNR obtained through calculation by using formula 1.1.

The processor 1001 is configured to use a preset algorithm to reduce a reference VAD decision threshold, so as to obtain a reduced VAD decision threshold.

Specifically, the reference VAD decision threshold may be a default VAD decision threshold, and the reference VAD decision threshold may be pre-stored, or may be temporarily obtained through calculation, where the reference VAD decision threshold may be calculated by using an existing well-known technology. When the reference VAD decision threshold is reduced by using the preset algorithm, the preset algorithm may be multiplying the reference VAD decision threshold by a coefficient that is less than 1, or another algorithm may be used. This illustrative example not forming part of the present invention imposes no limitation on a used specific algorithm. The VAD decision threshold may be properly reduced by using the preset algorithm, so that an enhanced SSNR is greater than the reduced VAD decision threshold. Therefore, a proportion of miss detection of an active signal can be reduced.

The processor 1001 is configured to compare the reference SSNR with the reduced VAD decision threshold to determine whether the audio signal is an active signal.

Optionally, the processor 1001 is specifically configured to determine the audio signal as a to-be-determined audio signal according to a sub-band SNR of the audio signal.

Optionally, in a case in which the processor 1001 determines the audio signal as a to-be-determined audio signal according to the sub-band SNR of the audio signal, the processor 1001 is specifically configured to determine the audio signal as a to-be-determined audio signal in a case in which a quantity of high-frequency portion sub-bands that are in the audio signal and whose sub-band SNRs are greater than a first preset threshold is greater than a first quantity.

Optionally, in a case in which the processor 1001 determines the audio signal as a to-be-determined audio signal according to the sub-band SNR of the audio signal, the processor 1001 is specifically configured to determine the audio signal as a to-be-determined audio signal in a case in which a quantity of high-frequency portion sub-bands that are in the audio signal and whose sub-band SNRs are greater than a first preset threshold is greater than a second quantity, and a quantity of low-frequency portion sub-bands that are in the audio signal and whose sub-band SNRs are less than a second preset threshold is greater than a third quantity.

Optionally, in a case in which the processor 1001 determines the audio signal as a to-be-determined audio signal according to the sub-band SNR of the audio signal, the processor 1001 is specifically configured to determine the audio signal as a to-be-determined audio signal in a case in which a quantity of sub-bands that are in the audio signal and whose values of sub-band SNRs are greater than a third preset threshold is greater than a fourth quantity.

Optionally, the processor 1001 is specifically configured to determine the audio signal as a to-be-determined audio signal in a case in which it is determined that the audio signal is an unvoiced signal. Specifically, a person skilled in the art may understand that there may be multiple methods for detecting whether the audio signal is an unvoiced signal. For example, whether the audio signal is an unvoiced signal may be determined by detecting a ZCR of the audio signal. Specifically, in a case in which the ZCR of the audio signal is greater than a ZCR threshold, it is determined that the audio signal is an unvoiced signal, where the ZCR threshold is determined according to a large quantity of experiments.

The first preset threshold and the second preset threshold may be obtained by means of statistics collection according to a large quantity of voice samples. Specifically, statistics about sub-band SNRs of high-frequency portion sub-bands are collected in a large quantity of unvoiced voice samples including background noise, and the first preset threshold is determined according to the sub-band SNRs, so that sub-band SNRs of most of the high-frequency portion sub-bands in these unvoiced samples are greater than the first preset threshold. Similarly, statistics about sub-band SNRs of low-frequency portion sub-bands are collected in these unvoiced voice samples, and the second preset threshold is determined according to the sub-band SNRs, so that sub-band SNRs of most of the low-frequency portion sub-bands in these unvoiced voice samples are less than the second preset threshold.

The third preset threshold is also obtained by means of statistics collection. Specifically, the third preset threshold is determined according to sub-band SNRs of a large quantity of noise signals, so that sub-band SNRs of most of sub-bands in these noise signals are less than the third preset threshold.

The first quantity, the second quantity, the third quantity, and the fourth quantity are also obtained by means of statistics collection. The first quantity is used as an example, where in a large quantity of voice samples including noise, statistics about a sub-band quantity of high-frequency portion sub-bands whose sub-band SNRs are greater than the first preset threshold are collected, and the first quantity is determined according to the quantity, so that a quantity of high-frequency portion sub-bands that are in most of these voice samples and whose sub-band SNRs are greater than the first preset threshold is greater than the first quantity. A method for determining the second quantity is similar to a method for determining the first quantity. The second quantity may be the same as the first quantity, or may be different from the first quantity. Similarly, for the third quantity, in the large quantity of voice samples including noise, statistics about a sub-band quantity of low-frequency portion sub-bands whose sub-band SNRs are greater than the second preset threshold are collected, and the third quantity is determined according to the quantity, so that a quantity of low-frequency portion sub-bands that are in most of these voice samples and whose sub-band SNRs are greater than the second preset threshold is greater than the third quantity. For the fourth quantity, in the large quantity of voice samples including noise, statistics about a quantity of sub-bands whose sub-band SNRs are greater than the third preset threshold are collected, and the fourth quantity is determined according to the quantity, so that a quantity of sub-bands that are in most of these voice samples and whose sub-band SNRs are greater than the third preset threshold is greater than the fourth quantity.

The apparatus 1000 shown in FIG. 10 may determine a feature of an input audio signal, reduce a reference VAD decision threshold according to the feature of the audio signal, and compare an enhanced SSNR with a reduced VAD decision threshold, so that a proportion of miss detection of an active signal can be reduced.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a ROM, a RAM, a magnetic disk, or an optical disc.

The foregoing descriptions are merely specific embodiments of the present invention, but are not intended to limit the protection scope of the present invention.

Therefore, the protection scope of the present invention shall be defined by the claims.

**Claims**

1. A computer-readable storage medium comprising instructions which, when executed by a computer, cause the computer to carry out steps of a method, wherein the method comprises the steps of:

   determining an enhanced segmental signal-to-noise ratio SSNR of an audio signal according to a reference SSNR of the audio signal when the audio signal is an unvoiced signal, wherein the enhanced SSNR is greater than the reference SSNR and the reference SSNR is calculated by adding up all sub-band SNRs of the audio signal; and

   comparing the enhanced SSNR with a voice activity detection VAD decision threshold to determine whether the audio signal is an active signal.

2. The computer-readable storage medium according to claim 1, wherein the determining the enhanced SSNR according to the reference SSNR of the audio signal comprises:
   determining the enhanced SSNR by using the following formula:

$$SSNR' = x * SSNR + y,$$

   wherein SSNR indicates the reference SSNR, SSNR' indicates the enhanced SSNR, and x and y indicate enhancement parameters.

3. The computer-readable storage medium according to claim 1 or 2, wherein the audio signal comprises 20 sub-bands and the 20 sub-bands are from sub-band 0 to sub-band 19.

4. A computer-readable storage medium comprising instructions which, when executed by a computer, cause the computer to carry out steps of a method, wherein the method comprises the steps of:

   determining an enhanced segmental signal-to-noise ratio, SSNR, according to a sub-band signal-to-noise ratio, SNR, of each sub-band and a weight of the sub-band SNR of each sub-band in an audio signal when the audio signal is an unvoiced signal, wherein the enhanced SSNR is greater than a reference SSNR, the reference SSNR is calculated by adding up all sub-band SNRs of the audio signal, and a weight of a sub-band SNR of a high-frequency portion sub-band whose sub-band SNR is greater than a first preset threshold is greater than a weight of a sub-band SNR of another sub-band; and

   comparing the enhanced SSNR with a voice activity detection, VAD, decision threshold to determine whether the audio signal is an active signal.

5. The computer-readable storage medium according to claim 4, wherein the audio signal comprises 20 sub-bands, the 20 sub-bands are from sub-band 0 to sub-band 19, and sub-band 18 and sub-band 19 are high-frequency portion sub-bands.

6. An apparatus for detecting an active signal, wherein the apparatus comprises a processor (701) and a memory (702), the processor (701) is configured to read instructions from the memory (702) and execute the steps of:

determining an enhanced segmental signal-to-noise ratio SSNR of an audio signal according to a reference SSNR of the audio signal when the audio signal is an unvoiced signal, wherein the enhanced SSNR is greater than the reference SSNR and the reference SSNR is calculated by adding up all sub-band SNRs of the audio signal; and

comparing the enhanced SSNR with a voice activity detection VAD decision threshold to determine whether the audio signal is an active signal.

7. The apparatus according to claim 6, wherein the processor (701) is configured to determine the enhanced SSNR by using the following formula:

$$SSNR' = x * SSNR + y$$,

wherein SSNR indicates the reference SSNR, SSNR' indicates the enhanced SSNR, and x and y indicate enhancement parameters.

8. The apparatus according to claim 6 or 7, wherein the audio signal comprises 20 sub-bands and the 20 sub-bands are from sub-band 0 to sub-band 19.

9. An apparatus for detecting an active signal, wherein the apparatus comprises a processor (801) and a memory (802), the processor (801) is configure to read instructions from the memory (802) and to execute the steps of:

determining an enhanced segmental signal-to-noise ratio, SSNR, according to a sub-band signal-to-noise ratio, SNR, of each sub-band and a weight of the sub-band SNR of each sub-band in an audio signal when the audio signal is an unvoiced signal, wherein the enhanced SSNR is greater than a reference SSNR, the reference SSNR is calculated by adding up all sub-band SNRs of the audio signal, and a weight of a sub-band SNR of a high-frequency portion sub-band whose sub-band SNR is greater than a first preset threshold is greater than a weight of a sub-band SNR of another sub-band; and

comparing the enhanced SSNR with a voice activity detection VAD decision threshold to determine whether the audio signal is an active signal.

10. The apparatus according to claim 9, wherein the audio signal comprises 20 sub-bands, the 20 sub-bands are from sub-band 0 to sub-band 19, and sub-band 18 and sub-band 19 are high-frequency portion sub-bands.

11. A program product comprising instructions which, when executed by a computer, cause the computer to carry out the steps of a method, wherein the method comprises the steps of:

determining an enhanced segmental signal-to-noise ratio SSNR of an audio signal according to a reference SSNR of the audio signal when the audio signal is an unvoiced signal, wherein the enhanced SSNR is greater than the reference SSNR and the reference SSNR is calculated by adding up all sub-band SNRs of the audio signal; and

comparing the enhanced SSNR with a voice activity detection VAD decision threshold to determine whether the audio signal is an active signal.

12. The program product according to claim 11, wherein the determining the enhanced SSNR according to the reference SSNR of the audio signal comprises:
determining the enhanced SSNR by using the following formula:

$$SSNR' = x * SSNR + y$$,

wherein SSNR indicates the reference SSNR, SSNR' indicates the enhanced SSNR, and x and y indicate enhancement parameters.

13. The program product according to claims 11 or 12, wherein the audio signal comprises 20 sub-bands and the 20 sub-bands are from sub-band 0 to sub-band 19.

14. A program product comprising instructions which, when executed by a computer, cause the computer to carry out the steps of a method, wherein the method comprises the steps of:

determining an enhanced segmental signal-to-noise ratio, SSNR, according to a sub-band signal-to-noise ratio, SNR, of each sub-band and a weight of the sub-band SNR of each sub-band in an audio signal when the audio signal is an unvoiced signal, wherein the enhanced SSNR is greater than a reference SSNR, the reference SSNR is calculated by adding up all sub-band SNRs of the audio signal, and a weight of a sub-band SNR of a high-frequency portion sub-band whose sub-band SNR is greater than a first preset threshold is greater than a weight of a sub-band SNR of another sub-band; and

comparing the enhanced SSNR with a voice activity detection, VAD, decision threshold to determine whether the audio signal is an active signal.

15. The program product according to claim 14, wherein the audio signal comprises 20 sub-bands, the 20 sub-bands are from sub-band 0 to sub-band 19, and sub-band 18 and sub-band 19 are high-frequency portion sub-bands.

## Patentansprüche

1. Computerlesbares Speichermedium, das Anweisungen umfasst, die bei Ausführung durch einen Computer bewirken, dass der Computer Schritte eines Verfahrens ausführt, wobei das Verfahren die folgenden Schritte umfasst:

Bestimmen eines verbesserten Segment-Signal-Rausch-Verhältnisses SSNR eines Audiosignals gemäß einem Referenz-SSNR des Audiosignals, wenn das Audiosignal ein stimmloses Signal ist, wobei das verbesserte SSNR größer als das Referenz-SSNR ist und das Referenz-SSNR durch Addieren sämtlicher Teilband-SNRs des Audiosignals berechnet wird; und

Vergleichen des verbesserten SSNR mit einer Sprechpausenerkennungs- bzw. VAD-Entscheidungsschwelle, um zu bestimmen, ob das Audiosignal ein aktives Signal ist.

2. Computerlesbares Speichermedium nach Anspruch 1, wobei das Bestimmen des verbesserten SSNR gemäß dem Referenz-SSNR des Audiosignals Folgendes umfasst:

Bestimmen des verbesserten SSNR unter Verwendung der folgenden Formel:

$$SSNR' = x * SSNR + y,$$

wobei SSNR das Referenz-SSNR angibt, SSNR' das verbesserte SSNR angibt und x und y Verbesserungsparameter angeben.

3. Computerlesbares Speichermedium nach Anspruch 1 oder 2, wobei das Audiosignal 20 Teilbänder umfasst und die 20 Teilbänder von Teilband 0 bis Teilband 19 reichen.

4. Computerlesbares Speichermedium, das Anweisungen umfasst, die bei Ausführung durch einen Computer bewirken, dass der Computer Schritte eines Verfahrens ausführt, wobei das Verfahren die folgenden Schritte umfasst:

Bestimmen eines verbesserten Segment-Signal-Rausch-Verhältnisses, SSNR, gemäß einem Teilband-Signal-Rausch-Verhältnis, Teilband-SNR, jedes Teilbands und einem Gewicht des Teilband-SNR jedes Teilbands in einem Audiosignal, wenn das Audiosignal ein stimmloses Signal ist, wobei das verbesserte SSNR größer als ein Referenz-SSNR ist, das Referenz-SSNR durch Addieren sämtlicher Teilband-SNRs des Audiosignals berechnet wird und ein Gewicht eines Teilband-SNR eines Hochfrequenzanteil-Teilbands, dessen Teilband-SNR größer als eine erste vorgegebene Schwelle ist, größer als ein Gewicht eines Teilband-SNR eines anderen Teilbands ist; und

Vergleichen des verbesserten SSNR mit einer Sprechpausenerkennungs- bzw. VAD-Entscheidungsschwelle, um zu bestimmen, ob das Audiosignal ein aktives Signal ist.

5. Computerlesbares Speichermedium nach Anspruch 4, wobei das Audiosignal 20 Teilbänder umfasst, die 20 Teilbänder von Teilband 0 bis Teilband 19 reichen und Teilband 18 und Teilband 19 Hochfrequenzanteil-Teilbänder sind.

6. Einrichtung zum Detektieren eines aktiven Signals, wobei die Einrichtung einen Prozessor (701) und einen Speicher (702) umfasst, wobei der Prozessor (701) dazu ausgelegt ist, Anweisungen aus dem Speicher (702) zu lesen und die folgenden Schritte auszuführen:

Bestimmen eines verbesserten Segment-Signal-Rausch-Verhältnisses SSNR eines Audiosignals gemäß einem Referenz-SSNR des Audiosignals, wenn das Audiosignal ein stimmloses Signal ist, wobei das verbesserte SSNR größer als das Referenz-SSNR ist und das Referenz-SSNR durch Addieren sämtlicher Teilband-SNRs des Audiosignals berechnet wird; und
Vergleichen des verbesserten SSNR mit einer Sprechpausenerkennungs- bzw. VAD-Entscheidungsschwelle, um zu bestimmen, ob das Audiosignal ein aktives Signal ist.

7. Einrichtung nach Anspruch 6, wobei der Prozessor (701) ausgelegt ist zum Bestimmen des verbesserten SSNR unter Verwendung der folgenden Formel:

$$SSNR' = x * SSNR + y,$$

wobei SSNR das Referenz-SSNR angibt, SSNR' das verbesserte SSNR angibt und x und y Verbesserungsparameter angeben.

8. Einrichtung nach Anspruch 6 oder 7, wobei das Audiosignal 20 Teilbänder umfasst und die 20 Teilbänder von Teilband 0 bis Teilband 19 reichen.

9. Einrichtung zum Detektieren eines aktiven Signals, wobei die Einrichtung einen Prozessor (801) und einen Speicher (802) umfasst, wobei der Prozessor (801) dazu ausgelegt ist, Anweisungen aus dem Speicher (802) zu lesen und die folgenden Schritte auszuführen:

Bestimmen eines verbesserten Segment-Signal-Rausch-Verhältnisses, SSNR, gemäß einem Teilband-Signal-Rausch-Verhältnis, Teilband-SNR, jedes Teilbands und einem Gewicht des Teilband-SNR jedes Teilbands in einem Audiosignal, wenn das Audiosignal ein stimmloses Signal ist, wobei das verbesserte SSNR größer als ein Referenz-SSNR ist, das Referenz-SSNR durch Addieren sämtlicher Teilband-SNRs des Audiosignals berechnet wird und ein Gewicht eines Teilband-SNR eines Hochfrequenzanteil-Teilbands, dessen Teilband-SNR größer als eine erste vorgegebene Schwelle ist, größer als ein Gewicht eines Teilband-SNR eines anderen Teilbands ist; und
Vergleichen des verbesserten SSNR mit einer Sprechpausenerkennungs- bzw. VAD-Entscheidungsschwelle, um zu bestimmen, ob das Audiosignal ein aktives Signal ist.

10. Einrichtung nach Anspruch 9, wobei das Audiosignal 20 Teilbänder umfasst, die 20 Teilbänder von Teilband 0 bis Teilband 19 reichen und Teilband 18 und Teilband 19 Hochfrequenzanteil-Teilbänder sind.

11. Programmprodukt, das Anweisungen umfasst, die bei Ausführung durch einen Computer bewirken, dass der Computer die Schritte eines Verfahrens ausführt, wobei das Verfahren die folgenden Schritte umfasst:

Bestimmen eines verbesserten Segment-Signal-Rausch-Verhältnisses SSNR eines Audiosignals gemäß einem Referenz-SSNR des Audiosignals, wenn das Audiosignal ein stimmloses Signal ist, wobei das verbesserte SSNR größer als das Referenz-SSNR ist und das Referenz-SSNR durch Addieren sämtlicher Teilband-SNRs des Audiosignals berechnet wird; und
Vergleichen des verbesserten SSNR mit einer Sprechpausenerkennungs- bzw. VAD-Entscheidungsschwelle, um zu bestimmen, ob das Audiosignal ein aktives Signal ist.

12. Programmprodukt nach Anspruch 11, wobei das Bestimmen des verbesserten SSNR gemäß dem Referenz-SSNR des Audiosignals Folgendes umfasst:
Bestimmen des verbesserten SSNR unter Verwendung der folgenden Formel:

$$SSNR' = x * SSNR + y,$$

wobei SSNR das Referenz-SSNR angibt, SSNR' das verbesserte SSNR angibt und x und y Verbesserungsparameter angeben.

**13.** Programmprodukt nach Anspruch 11 oder 12, wobei das Audiosignal 20 Teilbänder umfasst und die 20 Teilbänder von Teilband 0 bis Teilband 19 reichen.

**14.** Programmprodukt, das Anweisungen umfasst, die bei Ausführung durch einen Computer bewirken, dass der Computer die Schritte eines Verfahrens ausführt, wobei das Verfahren die folgenden Schritte umfasst:

Bestimmen eines verbesserten Segment-Signal-Rausch-Verhältnisses, SSNR, gemäß einem Teilband-Signal-Rausch-Verhältnis, Teilband-SNR, jedes Teilbands und einem Gewicht des Teilband-SNR jedes Teilbands in einem Audiosignal, wenn das Audiosignal ein stimmloses Signal ist, wobei das verbesserte SSNR größer als ein Referenz-SSNR ist, das Referenz-SSNR durch Addieren sämtlicher Teilband-SNRs des Audiosignals berechnet wird und ein Gewicht eines Teilband-SNR eines Hochfrequenzanteil-Teilbands, dessen Teilband-SNR größer als eine erste vorgegebene Schwelle ist, größer als ein Gewicht eines Teilband-SNR eines anderen Teilbands ist; und
Vergleichen des verbesserten SSNR mit einer Sprechpausenerkennungs- bzw. VAD-Entscheidungsschwelle, um zu bestimmen, ob das Audiosignal ein aktives Signal ist.

**15.** Programmprodukt nach Anspruch 14, wobei das Audiosignal 20 Teilbänder umfasst, die 20 Teilbänder von Teilband 0 bis Teilband 19 reichen und Teilband 18 und Teilband 19 Hochfrequenzanteil-Teilbänder sind.

## Revendications

**1.** Support de stockage lisible par ordinateur comprenant des instructions qui, lorsqu'elles sont exécutées par un ordinateur, amènent l'ordinateur à mettre en œuvre les étapes d'un procédé, le procédé comprenant les étapes consistant à :

déterminer un rapport signal sur bruit segmenté, SSNR, amélioré d'un signal audio en fonction d'un SSNR de référence du signal audio lorsque le signal audio est un signal non voisé, dans lequel le SSNR amélioré est plus important que le SSNR de référence et le SSNR de référence est calculé en totalisant tous les SNR de sous-bande du signal audio ; et
comparer le SSNR amélioré avec un seuil d'évaluation de détection d'activité vocale, VAD, afin de déterminer si le signal audio est un signal actif.

**2.** Support de stockage lisible par ordinateur selon la revendication 1, dans lequel la détermination du SSNR amélioré en fonction du SSNR de référence du signal audio consiste à :
déterminer le SSNR amélioré en utilisant la formule suivante :

$$SSNR' = x * SSNR + y, \text{ dans lequel}$$

le SSNR indique le SSNR de référence, SSNR' indique le SSNR amélioré et x et y indiquent des paramètres d'amélioration.

**3.** Support de stockage lisible par ordinateur selon la revendication 1 ou 2, dans lequel le signal audio comprend 20 sous-bandes et les 20 sous-bandes viennent d'une sous-bande 0 jusqu'à la sous-bande 19.

**4.** Support de stockage lisible par ordinateur comprenant des instructions qui, lorsqu'elles sont exécutées par un ordinateur, amènent l'ordinateur à mettre en œuvre les étapes d'un procédé, le procédé comprenant les étapes consistant à :

déterminer un rapport signal sur bruit segmenté, SSNR, amélioré en fonction d'un rapport signal sur bruit, SNR, de sous-bande de chaque sous-bande et d'un poids du SNR de sous-bande de chaque sous-bande dans un signal audio lorsque le signal audio est un signal non voisé, dans lequel le SSNR amélioré est plus important qu'un SSNR de référence, le SSNR de référence est calculé en totalisant tous les SNR de sous-bande du signal audio, et un poids d'un SNR de sous-bande d'une sous-bande de partie haute fréquence dont un SNR de sous-bande est plus important qu'un premier seuil prédéfini, est plus important qu'un poids d'un SNR de sous-bande d'une autre sous-bande ; et
comparer le SSNR amélioré avec un seuil d'évaluation de détection d'activité vocale, VAD, afin de déterminer si le signal audio est un signal actif.

5. Support de stockage lisible par ordinateur selon la revendication 4, dans lequel le signal audio comprend 20 sous-bandes, les 20 sous-bandes viennent d'une sous-bande 0 jusqu'à la sous-bande 19, et la sous-bande 18 et la sous-bande 19 sont des sous-bandes de partie haute fréquence.

6. Appareil pour détecter un signal actif, l'appareil comprenant un processeur (701) et une mémoire (702), le processeur (701) est configuré pour lire des instructions à partir de la mémoire (702) et exécuter les étapes consistant à :

déterminer un rapport signal sur bruit segmenté, SSNR, amélioré d'un signal audio en fonction d'un SSNR de référence du signal audio lorsque le signal audio est un signal non voisé, dans lequel le SSNR amélioré est plus important que le SSNR de référence et le SSNR de référence est calculé en totalisant tous les SNR de sous-bande du signal audio ; et
comparer le SSNR amélioré avec un seuil d'évaluation de détection d'activité vocale, VAD, afin de déterminer si le signal audio est un signal actif.

7. Appareil selon la revendication 6, dans lequel le processeur (701) est configuré pour déterminer le SSNR amélioré en utilisant la formule suivante :

$$SSNR' = x * SSNR + y, \text{ dans lequel}$$

le SSNR indique le SSNR de référence, SSNR' indique le SSNR amélioré et x et y indiquent des paramètres d'amélioration.

8. Appareil selon la revendication 6 ou 7, dans lequel le signal audio comprend 20 sous-bandes et les 20 sous-bandes viennent d'une sous-bande 0 jusqu'à la sous-bande 19.

9. Appareil pour détecter un signal actif, l'appareil comprenant un processeur (801) et une mémoire (802), le processeur (801) est configuré pour lire des instructions à partir de la mémoire (802) et exécuter les étapes consistant à :

déterminer un rapport signal sur bruit segmenté, SSNR, amélioré en fonction d'un rapport signal sur bruit, SNR, de sous-bande de chaque sous-bande et d'un poids du SNR de sous-bande de chaque sous-bande dans un signal audio lorsque le signal audio est un signal non voisé, dans lequel le SSNR amélioré est plus important qu'un SSNR de référence, le SSNR de référence est calculé en totalisant tous les SNR de sous-bande du signal audio, et un poids d'un SNR de sous-bande d'une sous-bande de partie haute fréquence dont un SNR de sous-bande est plus important qu'un premier seuil prédéfini, est plus important qu'un poids d'un SNR de sous-bande d'une autre sous-bande ; et
comparer le SSNR amélioré avec un seuil d'évaluation de détection d'activité vocale, VAD, afin de déterminer si le signal audio est un signal actif.

10. Appareil selon la revendication 9, dans lequel le signal audio comprend 20 sous-bandes, les 20 sous-bandes viennent d'une sous-bande 0 jusqu'à la sous-bande 19, et la sous-bande 18 et la sous-bande 19 sont des sous-bandes de partie haute fréquence.

11. Produit de programme comprenant des instructions qui, lorsqu'elles sont exécutées par un ordinateur, amènent l'ordinateur à mettre en œuvre les étapes d'un procédé, le procédé comprenant les étapes consistant à :

déterminer un rapport signal sur bruit segmenté, SSNR, amélioré d'un signal audio en fonction d'un SSNR de référence du signal audio lorsque le signal audio est un signal non voisé, dans lequel le SSNR amélioré est plus important que le SSNR de référence et le SSNR de référence est calculé en totalisant tous les SNR de sous-bande du signal audio ; et
comparer le SSNR amélioré avec un seuil d'évaluation de détection d'activité vocale, VAD, afin de déterminer si le signal audio est un signal actif.

12. Produit de programme selon la revendication 11, dans lequel la détermination du SSNR amélioré en fonction du SSNR de référence du signal audio comprend l'étape consistant à :
déterminer SSNR amélioré en utilisant la formule suivante :

$$SSNR' = x * SSNR + y, \text{ dans lequel}$$

le SSNR indique le SSNR de référence, SSNR' indique le SSNR amélioré et x et y indiquent des paramètres d'amélioration.

13. Produit de programme selon la revendication 11 ou 12, dans lequel le signal audio comprend 20 sous-bandes, et les 20 sous-bandes viennent d'une sous-bande 0 jusqu'à la sous-bande 19.

14. Produit de programme comprenant des instructions qui, lorsqu'elles sont exécutées par un ordinateur, amènent l'ordinateur à mettre en œuvre les étapes d'un procédé, le procédé comprenant les étapes consistant à :

déterminer un rapport signal sur bruit segmenté, SSNR, amélioré en fonction d'un rapport signal sur bruit, SNR, de sous-bande de chaque sous-bande et d'un poids du SNR de sous-bande de chaque sous-bande dans un signal audio lorsque le signal audio est un signal non voisé, dans lequel le SSNR amélioré est plus important qu'un SSNR de référence, le SSNR de référence est calculé en totalisant tous les SNR de sous-bande du signal audio, et un poids d'un SNR de sous-bande d'une sous-bande de partie haute fréquence dont un SNR de sous-bande est plus important qu'un premier seuil prédéfini, est plus important qu'un poids d'un SNR de sous-bande d'une autre sous-bande ; et
comparer le SSNR amélioré avec un seuil d'évaluation de détection d'activité vocale, VAD, afin de déterminer si le signal audio est un signal actif.

15. Produit de programme selon la revendication 14, dans lequel le signal audio comprend 20 sous-bandes, les 20 sous-bandes viennent d'une sous-bande 0 jusqu'à la sous-bande 19, et la sous-bande 18 et la sous-bande 19 sont des sous-bandes de partie haute fréquence.

Determine an input audio signal as a to-be-determined audio signal ⎯ 101

Determine an enhanced SSNR of the audio signal ⎯ 102

Compare the enhanced SSNR with a VAD decision threshold to determine whether the audio signal is an active signal ⎯ 103

## FIG. 1

Determine a sub-band SNR of an input audio signal ⎯ 201

Determine the input audio signal as a to-be-determined audio signal ⎯ 202

Determine an enhanced SSNR of the audio signal ⎯ 203

Compare the enhanced SSNR with a VAD decision threshold to determine whether the audio signal is an active signal ⎯ 204

## FIG. 2

| 301 |
| --- |
| Determine an input audio signal as a to-be-determined audio signal |

| 302 |
| --- |
| Determine a weight of a sub-band SNR of each sub-band in the audio signal |

| 303 |
| --- |
| Determine an enhanced SSNR according to the sub-band SNR of each sub-band and the weight of the sub-band SNR of each sub-band in the audio signal |

| 304 |
| --- |
| Compare the enhanced SSNR with a VAD decision threshold to determine whether the audio signal is an active signal |

FIG. 3

| 401 |
| --- |
| Determine an input audio signal as a to-be-determined audio signal |

| 402 |
| --- |
| Acquire a reference SSNR of the audio signal |

| 403 |
| --- |
| Use a preset algorithm to reduce a reference VAD decision threshold, so as to obtain a reduced VAD decision threshold |

| 404 |
| --- |
| Compare the reference SSNR with the reduced VAD decision threshold to determine whether the audio signal is an active signal |

FIG. 4

```
┌─────────────────────────────────────────────┐
│            Apparatus 500                      │
│   ┌───────────────────────────────────────┐   │
│   │      First determining unit 501        │   │
│   └───────────────────────────────────────┘   │
│   ┌───────────────────────────────────────┐   │
│   │     Second determining unit 502        │   │
│   └───────────────────────────────────────┘   │
│   ┌───────────────────────────────────────┐   │
│   │      Third determining unit 503        │   │
│   └───────────────────────────────────────┘   │
│   ┌───────────────────────────────────────┐   │
│   │     Fourth determining unit 504        │   │
│   └───────────────────────────────────────┘   │
└─────────────────────────────────────────────┘
```

FIG. 5

```
┌─────────────────────────────────────────────┐
│            Apparatus 600                      │
│   ┌───────────────────────────────────────┐   │
│   │      First determining unit 601        │   │
│   └───────────────────────────────────────┘   │
│   ┌───────────────────────────────────────┐   │
│   │     Second determining unit 602        │   │
│   └───────────────────────────────────────┘   │
│   ┌───────────────────────────────────────┐   │
│   │      Third determining unit 603        │   │
│   └───────────────────────────────────────┘   │
└─────────────────────────────────────────────┘
```

FIG. 6

Apparatus 700

Processor 701

Memory 702

FIG. 7

Apparatus 800

Processor 801

Memory 802

FIG. 8

Apparatus 900

First determining unit 901

Second determining unit 902

Third determining unit 903

Fourth determining unit 904

FIG. 9

Apparatus 1000

Processor 1001

Memory 1002

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013191117 A1

- US 2013130464 A1